# EUROPÄISCHE PATENTANMELDUNG

(11) **EP 4 566 869 A1**
(43) Veröffentlichungstag der Anmeldung: **11.06.2025**
(21) Anmeldenummer: 24216181.8
(22) Anmeldetag: 28.11.2024
(51) Int. Cl.: B60L 53/30, B60L 53/64, B60L 53/65, B60L 53/66, G06Q 20/14, G06Q 30/0283, G07F 15/00, G07F 15/08

(54) **LADEANORDNUNG FÜR EIN ELEKTROFAHRZEUG UND BETRIEBSVERFAHREN FÜR EINE SOLCHE LADEANORDNUNG**

(30) Priorität: 30.11.2023 DE 102023133608
(71) Anmelder: ev-pay GmbH, 85368 Moosburg a. d. Isar (DE)
(72) Erfinder: BLUM, Felix, 85368 Moosburg (DE); BLUM, Reinhard, 85368 Moosburg (DE)
(74) Vertreter: Kleine, Hubertus

(57) **Zusammenfassung**

Die Erfindung betrifft ein Betriebsverfahren für eine Ladeanordnung für ein Elektrofahrzeug, wobei die Ladeanordnung mindestens eine Ladestation (10) und eine Administrationseinheit (30) umfasst. Das Verfahren weist die folgenden Schritte auf:
- Bereitstellen von Tarifen für einen Ladevorgang an der mindestens einen Ladestation (10);
- Speichern und archivieren der bereitgestellten Tarife durch einen Tarifserver (40);
- Bereitstellen einer öffentlichen Zugangsmöglichkeit, um die aktuellen und archivierten Tarife von dem Tarifserver (40) abzurufen;
- Senden einer ersten Tarifanfrage von der Administrationseinheit (30) an den Tarifserver (40) zum Abrufen eines aktuellen Tarifs für die mindestens eine Ladestation (10);
- Durchführen des Ladevorgangs durch die mindestens eine Ladestation (10) und erfassen einer bei dem Ladevorgang übertragenen Energiemenge durch einen Energiemengenzähler (12) der mindestens einen Ladestation (10);
- Erstellen eines Abrechnungsbelegs durch die Administrationseinheit (30) basierend auf dem zuvor abgerufenen Tarif.

Die Erfindung betrifft weiterhin eine Ladeanordnung mit mindestens einer Ladestation (10). Die Ladeanordnung zeichnet sich durch einen Tarifserver (40) aus, der einen an der mindestens einen Ladestation (10) geltenden Tarif speichert und archiviert und der dazu eingerichtet ist, aktuelle und archivierte Tarife auf eine Anfrage hin bereitzustellen.

## Beschreibung

Die Erfindung betrifft ein Betriebsverfahren für eine Ladeanordnung für ein Elektrofahrzeug, wobei die Ladeanordnung mindestens eine Ladestation und eine Administrationseinheit umfasst. Die Erfindung betrifft weiterhin eine Ladeanordnung mit mindestens einer Ladestation.

Zum Aufladen von Fahrbatterien von Elektrofahrzeugen werden Ladestationen eingesetzt, an die ein Elektrofahrzeug mittels eines geeigneten Ladekabels angeschlossen wird oder über eine induktive Kopplung verbunden wird. Es wird dann elektrische Energie in Form von Gleich- oder Wechselstrom im Regelfall von der Ladestation zum Elektrofahrzeug, unter Umständen zur Stützung des Energieversorgungsnetzes auch vom Energiefahrzeug an die Ladestation übertragen. Solche Ladestationen sind in Form von ggf. freistehenden Ladesäulen oder als sog. "Wallboxen" zur Wandmontage bekannt.

Wenn Ladestationen für mehrere Personen zugänglich sein sollen, also beispielsweise im öffentlichen Raum aufgestellt sind oder im Bereich von Mehrfamilienhäusern oder auf Firmengeländen, ist es erforderlich, die abgegebene oder aufgenommene Energiemenge eindeutig einem Benutzer der Ladestation zuordnen zu können. Weiter ist die abgegebene oder aufgenommene Energiemenge in nachvollziehbarer und rechtskonformer Weise zu erfassen und zur Überprüfung dem Nutzer vorzulegen. Dabei sind ggf. Rechtsgrundlagen zu beachten, beispielsweise sind in Deutschland die Erfordernisse des Eichrechts einzuhalten. Schließlich sind Zahlungsmodalitäten ebenfalls transparent vorab festzulegen. Dazu gehört z.B., dass ein Nutzer vor Beginn eines Ladevorgangs nachvollziehbar über einen Energiepreis des sich anschließenden Ladevorgangs informiert werden muss.

Es haben sich im Markt Ladeanordnungen etabliert, bei denen eine Nutzung einer Ladestation erst dann möglich ist, wenn sich ein Nutzer vorab mit seinen Bezahlinformationen bei einem Betreiber der Ladestation angemeldet hat und beispielsweise über eine speziell für diese Nutzung erstellte Identifikationskarte ("Ladekarte") verfügt. Diese Vorgehensweise schränkt Nutzer allerdings stark ein, da es aufwändig und unter Umständen mit hohen monatlichen Grundgebühren verbunden ist, für eine Vielzahl von verschiedenen Systemen, die sich im Markt etabliert haben, eine jeweilige Ladekarte vorzuhalten. Gerade wenn ein Elektrofahrzeug in einem großen Radius benutzt wird, ergibt sich häufig die Situation, dass eine verfügbare Ladestation nicht benutzt werden kann, weil die passende Ladekarte nicht vorliegt.

Um Ladestationen unabhängig von einer Voranmeldung nutzbar zu machen, ist beispielsweise aus der Druckschrift EP 3 971 023 A1 eine Ladestation für Elektrofahrzeuge bekannt, die ein Bezahlkartenterminal umfasst, mit dem eine Kredit- oder Girokontokarte eingelesen werden kann. Es wird dann in der Ladestation eine Identifikationskennung erstellt, die zumindest einen Teil einer Kreditkartennummer oder Girokontonummer umfasst. Weiter werden Zählwerte der während eines Ladevorgangs zugeführten Energiemenge in der Ladestation gemessen und es wird basierend auf den Zählwerten und der Identifikationskennung ein Beleg für die Abrechnung des Ladevorgangs erstellt, der gespeichert wird und der vom Nutzer zur Kontrolle heruntergeladen werden kann. Um eine erhöhte Sicherheit zu erzielen, ist weiter vorgesehen, die Zählwerte der Energiemenge und die Identifikationskennung, ggf. mit einer zusätzlichen Identifikation der Ladestation und einer Zeitinformation zum Ladevorgangs, digital in der Ladestation zu signieren, so dass der Abrechnungsbeleg für die weitere Verarbeitung manipulationssicher ist.

Das Verfahren ist flexibel, da unabhängig von einer Voranmeldung und Einrichtung eines Kundenkontos bei dem Betreiber der Ladestation diese mit Kredit-, Debit- oder Girokarte genutzt werden kann. Allerdings ist das Verfahren mit bereits installierten Ladestationen, die nicht über eine entsprechende Ausstattung mit einem Bezahlkartenterminal verfügen, nicht umsetzbar.

Es ist daher eine Aufgabe der vorliegenden Erfindung, eine Ladeanordnung und ein Betriebsverfahren der eingangs genannten Art zu schaffen, die flexibel in der Nutzung sind und die als Nachrüstlösungen auch mit Ladestationen umgesetzt werden können, die nicht über ein integriertes Bezahlkartenterminal verfügen.

Diese Aufgabe wird gelöst durch ein Betriebsverfahren und eine Ladeanordnung mit den Merkmalen des jeweiligen unabhängigen Anspruchs. Vorteilhafte Ausgestaltungen und Weiterbildungen sind Gegenstand der abhängigen Ansprüche.

Ein erfindungsgemäßes Betriebsverfahren für eine Ladeanordnung der eingangs genannten Art weist die folgenden Schritte auf:
Es werden Tarife für einen Ladevorgang an der mindestens einen Ladestation bereitgestellt und durch einen Tarifserver gespeichert und archiviert. Weiter wird eine öffentliche Zugangsmöglichkeit bereitgestellt, um die aktuellen und archivierten Tarife von dem Tarifserver abzurufen zu können. Es wird dann eine erste Tarifanfrage von der Administrationseinheit an den Tarifserver zum Abrufen eines aktuellen Tarifs für die mindestens eine Ladestation gesendet und der Ladevorgang durch die mindestens eine Ladestation durchgeführt, wobei eine bei dem Ladevorgang übertragenen Energiemenge durch einen Energiemengenzähler der mindestens einen Ladestation erfasst wird. Weiter wird ein Abrechnungsbeleg durch die Administrationseinheit basierend auf dem zuvor abgerufenen Tarif erstellt.

Der zu einem bestimmten Zeitpunkt geltende Preis ist aufgrund der Speicherung auf dem Tarifserver vertrauenswürdig. Dieses gilt insbesondere, da die Tarife durch die öffentliche Zugangsmöglichkeit öffentlich einsehbar sind, z.B. über eine bereitgestellte Webseite. Dadurch, dass auch archivierte Tarife abrufbar sind, kann jederzeit auch nach dem Ladevorgang überprüft werden, ob der Ladevorgang auch tatsächlich mit dem derzeit aktuellen Tarif abgerechnet wurde. Das Verfahren kann zudem mit Ladestationen eingesetzt werden, die kein integriertes Bezahltermin aufweisen, da die Integrität der Zusammenarbeit von Ladestation und Bezahlterminal durch den vertrauenswürdigen Tarifserver abgesichert ist.

Bei einer vorteilhaften Ausgestaltung des Betriebsverfahrens wird mit dem Abrufen des aktuellen Tarifs durch die Administrationseinheit von dem Tarifserver eine eindeutige Transaktions-ID generiert, die zusammen mit dem aktuellen Tarif sowie einem ersten Zeitstempel von dem Tarifserver gespeichert wird. Die Transaktions-ID kann in allen folgenden Schritte zum eindeutigen Referenzieren des abgerufenen und damit zugesicherten Tarifs genutzt werden. Weiter wird bevorzugt von der mindestens einen Ladestation nach dem Ladevorgang ein Datensatz erstellt, der die erfassten Energiemenge und eine Ladevorgangs-ID umfasst und der an die Administrationseinheit gesendet wird. Besonders vorteilhaft wird die Ladevorgangs-ID von der Administrationseinheit an den Tarifserver gesendet wird und durch den Tarifserver mit der Transaktions-ID verknüpft.

Bei einer weiteren vorteilhaften Ausgestaltung des Betriebsverfahrens sendet die Administrationseinheit eine zweite Tarifanfrage an den Tarifserver, um einen Tarif für die mindestens eine Ladestation abzurufen. Bevorzugt werden die beiden abgerufenen Tarife verglichen und es wird abhängig von einem Ergebnis des Vergleichs der Abrechnungsbeleg auf Basis eines der Tarife erstellt. Beispielsweise kann der Tarif, der zu einem günstigeren Gesamtpreis des Ladevorgangs führt, dem Abrechnungsbeleg zugrunde gelegt werden. Auf diese Weise ist es möglich, sich während des Ladevorgangs ändernde Tarife zu berücksichtigen.

Bei einer weiteren vorteilhaften Ausgestaltung des Betriebsverfahrens wird das Elektrofahrzeugs vor dem Senden der ersten Tarifanfrage an die mindestens eine Ladestation angeschlossen und es wird eine Nachricht über das Anschließen des Elektrofahrzeugs von der mindestens einen Ladestation an die Administrationseinheit gesendet. Die Nachricht über das Anschließen des Elektrofahrzeugs kann insbesondere eine Ladestations-ID der mindestens einen Ladestation und/oder eine aktuell von der Ladestation angezeigte Zeit in Form eines Zeit- und Datumwerts umfassen, wobei die Ladestations-ID und/oder der Zeit- und Datumwert mit der ersten Tarifanfrage von der Administrationseinheit an den Tarifserver übermittelt werden. Ach hierbei kann eine Verknüpfung der von der Administrationseinheit übermittelten Informationen durch den Tarifserver mit der Transaktions-ID erfolgen.

Bei einer weiteren vorteilhaften Ausgestaltung des Betriebsverfahrens werden vor dem Starten des Ladevorgangs Bezahlinformationen von dem Nutzer durch ein Bezahlkartenterminal abgefragt und eingelesen. Bevorzugt werden nach dem Einlesen die Bezahlinformationen durch eine Anfrage bei einem Zahlungsdienstleister verifiziert und der Ladevorgang wird nur durchgeführt, wenn die Bezahlinformationen bestätigt werden. Es kann so verhindert werden, dass ein Ladevorgang mit nicht belastbaren Bezahldaten gestartet wird, wodurch der Betreiber der Ladeanordnung vor einem missbräuchlichen Laden geschützt wird.

Bei einer weiteren vorteilhaften Ausgestaltung des Betriebsverfahrens wird der aktuelle Tarif an das Bezahlkartenterminal gesendet wird und dort zumindest teilweise dargestellt. Auf diese Weise wird der Benutzer zusätzlich zur Möglichkeit der öffentlichen Tarifeinsicht einfach und verbrauchergerecht über die zu erwartenden Ladekosten informiert.

Bei einer weiteren vorteilhaften Ausgestaltung des Betriebsverfahrens wird der Abrechnungsbeleg an eine Abrechnungsstelle übertragen. Dabei kann dem Nutzer eine weitere Zugangsmöglichkeit bereitgestellt werden, über die der Abrechnungsbeleg abgerufen werden kann. Das vereinfacht eine für den Nutzer papierlose und nachträgliche Archivierung von Rechnungen.

Eine erfindungsgemäße Ladeanordnung für ein Elektrofahrzeug umfasst mindestens eine Ladestation und zeichnet sich dadurch aus, dass die Ladeanordnung einen Tarifserver umfasst, der einen an der mindestens einen Ladestation geltenden Tarif speichert und archiviert und der dazu eingerichtet ist, aktuelle und archivierte Tarife auf eine Anfrage hin bereitzustellen. Es ergeben sich die im Zusammenhang mit dem Betriebsverfahren genannten Vorteile.

In einer vorteilhaften Ausgestaltung der Ladeanordnung ist an der mindestens einen Ladestation eine Web-Adresse bereitgestellt ist, über die aktuelle und archivierte Tarife von dem Tarifserver abrufbar sind. Weiter vorteilhaft umfasst die Ladeanordnung eine Administrationseinheit zur Steuerung eines Ladevorgangs an der mindestens einen Ladestation, wobei die Administrationseinheit dazu eingerichtet ist, einen Tarif für einen Ladevorgang von dem Tarifserver anzufragen. Besonders vorteilhaft ist die Ladeanordnung zur Durchführung des zuvor beschriebenen Betriebsverfahrens eingerichtet.

Die Erfindung wird nachfolgend anhand eines Ausführungsbeispiels mithilfe von Figuren näher erläutert. Die Figuren zeigen:
- Fig. 1: eine schematische Darstellung eines Ausführungsbeispiels einer Ladeanordnung; und
- Fig. 2: ein Flussdiagramm eines Betriebsverfahrens für eine Ladeanordnung.

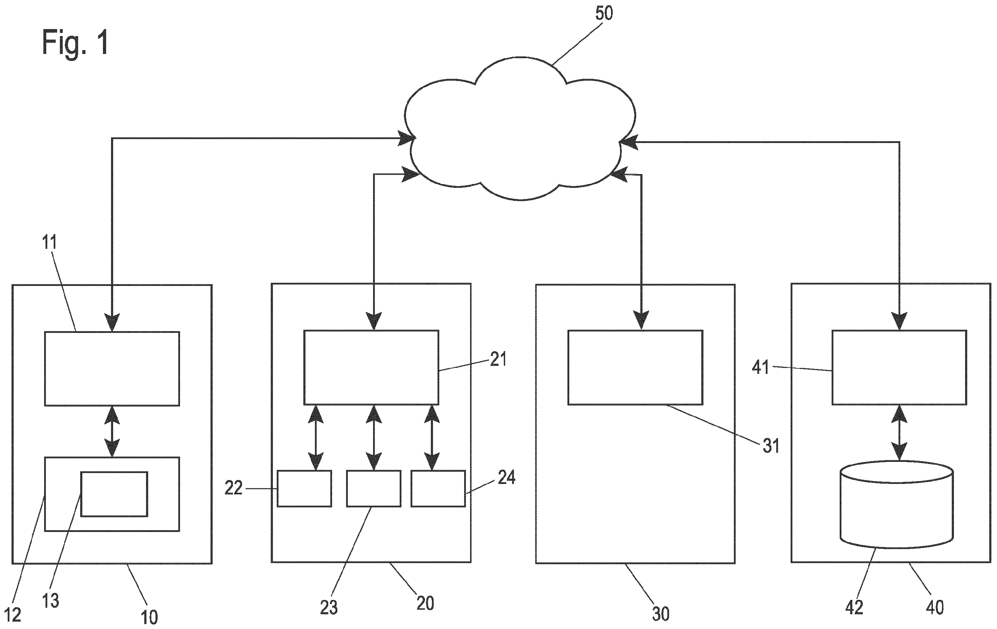

In Fig. 1 ist beispielhaft in Form eines Blockdiagramms ein Ausführungsbeispiel einer erfindungsgemäßen Ladeanordnung gezeigt. Die Ladeanordnung umfasst in diesem Ausführungsbeispiel eine Ladestation 10, ein Bezahlkartenterminal 20, eine Administrationseinheit 30 und einen Tarifserver 40. Die vier genannten Einheiten sind über ein Netzwerk 50 für einen Datenaustausch untereinander verbunden. Über das Netzwerk 50 kann eine Kommunikation auch zu anderen, hier nicht explizit dargestellten Einheiten erfolgen. Als Netzwerk 50 kann insbesondere das Internet dienen. Es ist in alternativen Ausgestaltungen auch möglich, einen Datenaustausch zwischen jeweils zwei oder mehr der gezeigten Einheiten, also z.B. zwischen der Ladestation 10 und dem Bezahlkartenterminal 20 oder zwischen dem Bezahlkartenterminal 20 und der Administrationseinheit 30, über eine unabhängig von dem Netzwerk 50 arbeitende Datenverbindung vorzunehmen. Ggf. kann eine solche Datenverbindung auch eine drahtgebundene Punkt-zu-Punkt-Verbindung sein.

Die Ladestation 10 weist eine Steuereinheit 11 auf, über die auch die Kommunikation mit dem Netzwerk 50 erfolgt. Weiter weist die Ladestation 10 einen Energiemengenzähler 12 auf, der eine Signatureinheit 13 umfasst. In alternativen Ausgestaltungen kann die Signatureinheit 13 auch innerhalb der Ladestation 10 extern vom Energiemengenzähler 12 angeordnet sein.

Weitere Komponenten, die die Ladestation 10 zwingend oder optional aufweist, sind aus Gründen der Übersichtlichkeit nicht dargestellt. Solche Komponenten umfassten beispielsweise einen Ladeanschluss zur Verbindung der Ladestation 10 mit einem zu ladenden Elektrofahrzeug. Als Ladeanschluss kann eine Ladebuchse oder ein fest an der Ladestation 10 angeschlagenes Ladekabel mit Ladestecker dienen. Weiter sind Komponenten zur Energieversorgung der Ladestation 10 nicht gezeigt, insbesondere zur Zuführung eines in der Regel dreiphasigen Wechselstroms, der entweder als Wechselstrom oder nach Gleichrichtung als Gleichstrom an das Elektrofahrzeug über den Ladeanschluss übertragen wird. Alternativ kann die Ladestation 10 auch an einen Gleichspannungsbus zu ihrer Energieversorgung angeschlossen sein. Im Zusammenhang mit der Übertragung des Ladestroms an das Elektrofahrzeug sind in der Ladestation 10 auch Schalt- und Sicherheitsorgane angeordnet, beispielsweise Fehlerstromschutzschalter und Überstrom- und ggf. Überspannungssicherungen. Zur Steuerung des Ladevorgangs ist eine Ladesteuerung vorhanden, die in der Steuereinheit 11 oder in einer separaten Einheit umgesetzt sein kann.

Weiter kann die Ladestation 10 Anzeige- und/oder Bedienelemente aufweisen, z.B. einen Bildschirm, insbesondere einen Touchscreen, zur Darstellung von Informationen zum Ladevorgang oder zum Darstellen eines Zustands der Ladestation 10 und/oder des Ladevorgangs.

Die Ladestation 10 kann als Ladesäule, ggf. freistehende Ladesäule, ausgebildet sein oder auch für eine Wandmontage geeignet sein, also als "Wallbox" ausgebildet sein.

Beim Ausführungsbeispiel der Fig. 1 ist separat von der Ladestation 10 ein Bezahlkartenterminal 20 vorhanden, das sich bevorzugt in der Nähe der Ladestation 10 befindet. Es kann vorgesehen sein, ein Bezahlkartenterminal 20 für eine Mehrzahl von benachbart aufgestellten Ladestationen 10 vorzusehen. Das Bezahlkartenterminal 20 umfasst eine Steuereinheit 21, die mit einem Kartenleser 22, mit einer Anzeigeeinheit 23, z.B. einem Display, und mit einer Bedieneinheit 24, z.B. einem Tastenfeld, gekoppelt ist. Die genannten Komponenten, also die Steuereinheit 21, der Kartenleser 22, die Anzeigeeinheit 23, und die Bedieneinheit 24, können separate Elemente sein, die über Kabel miteinander verbunden sind. Es ist auch denkbar, alle oder einige der Komponenten in einer kompakten Einheit zu integrieren.

Das Bezahlkartenterminal 20 ermöglicht es, auf einer Karte gespeicherte Informationen mithilfe des Kartenlesers 22 auszulesen. Je nach Art und Weise, wie die Informationen auf der Karte gespeichert sind, kann der Kartenleser 22 als Chip- oder Magnetkartenleser, in den die Karte eingeführt wird, ausgebildet sein oder auch als kontaktloser Kartenleser, der Informationen drahtlos aus der Karte ausliest. Die Karte kann dazu z.B. als RFID (Radio Frequency Identification) - Karte ausgebildet sein oder einen NFC (Near Field Communication) - Chip aufweisen. Der Kartenleser 22 kann auch für verschiedene Kartenformate geeignet sein oder es können mehrere Kartenleser 22, die für unterschiedliche Karten geeignet sind, vorhanden sein. Als Anzeigeeinheit 23 kann z.B. ein Bildschirm (Display) verwendet werden, um dem Nutzer Anweisungen mitzuteilen, welche Schritte als nächstes erwartet werden. Die Bedieneinheit 24 kann eine Tastatur umfassen, mit der z.B. eine Geheimzahl (PIN) eingegeben werden kann.

Während im dargestellten Beispiel die Ladestation 10 und das Bezahlkartenterminal 20 separate Einheiten sind, ist es ebenfalls denkbar, dass das Bezahlkartenterminal 20 in die Ladestation 10 integriert ist. Sind mehrere Ladestationen 10 vorhanden, kann jede mit einem Bezahlkartenterminal 20 versehen sein. Es ist allerdings auch denkbar, ein Bezahlkartenterminal 20 in einer der Ladestationen 10 anzuordnen, das auch im Zusammenhang mit den anderen Ladestationen 10 verwendet wird.

Wichtig ist festzuhalten, dass das Bezahlkartenterminal 20 separat von der Ladestation 10 angeordnet und ausgebildet sein kann, was ermöglicht, Ladestationen, die bereits vorhanden sind und kein Bezahlkartenterminal aufweisen, im Rahmen einer erfindungsgemäßen Ladeanordnung im Zuge einer Nachrüstlösung einzusetzen. Grundsätzlich kann das erfindungsgemäße Verfahren auch mit einer Ladeanordnung ohne Bezahlkartenterminal durchgeführt werden, falls eine Identität des Nutzers auf andere Art ermittelt wird und Informationen darüber, wie eine Bezahlung des Ladevorgangs erfolgt, (nachfolgend auch Bezahlinformationen genannt) vorab hinterlegt sind. Beispielsweise kann eine Identität des Nutzers indirekt über eine Fahrzeugkennung erfolgen, die z.B. über einen Datenaustausch mit dem Elektrofahrzeug über den Ladeanschluss oder über eine automatische Auswertung von Kameraaufnahmen eines Zulassungsschilds ("Nummernschilds") eingelesen werden kann.

Die Administrationseinheit 30 und der Tarifserver 40 können bei dem erfindungsgemäßen Verfahren vorteilhaft separat sowohl von der Ladestation 10 als auch von dem Bezahlkartenterminal 20 angeordnet sein.

Die Administrationseinheit 30 und der Tarifserver 40 umfassen jeweils einen oder mehrere (Web-) Server 31, 41, die ggf. redundant und verteilt (Web-) Dienste ausführen.

Die Administrationseinheit 30 koordiniert den Betrieb der Ladeanordnung und wirkt dabei auch steuernd auf verschiedene Komponenten, z.B. die Ladestation 10, ein. Der Tarifserver 40 hat insbesondere eine protokollierende Funktion und archiviert Tarife, nachfolgend auch Preisinformationen genannt, um nachvollziehen zu können, zu welchem Zeitpunkt welche Tarife gelten bzw. gegolten haben. Der Tarifserver weist dazu einen Datenspeicher 42 auf, der z.B. ein Dateisystem und/oder eine Datenbank umfassen kann. Der Datenspeicher 42 ist bevorzugt mit Schutz- und Protokollmechanismen versehen, z.B. einem "Journaling", das vorgenommenen Änderungen an Daten nachvollziehbar macht. Damit kann er als vertrauenswürde Einheit im Hinblick auf zugesagte Preise fungieren.

Bevorzugt ist der Tarifserver 40 eine von der Administrationseinheit 30 unabhängige Einheit. Er kann insbesondere auch von verschiedenen Administrationseinheiten 30, auch unterschiedlicher Anbieter und Betreiber von Ladeanordnungen, eingesetzt werden. Es ist dabei jedoch nicht ausgeschlossen, dass der Tarifserver 40 und die Administrationseinheit 30 als voneinander unabhängige Einheiten dennoch auf derselben Hardware, z.B. ein und demselben Server-Computer, ausgeführt werden.

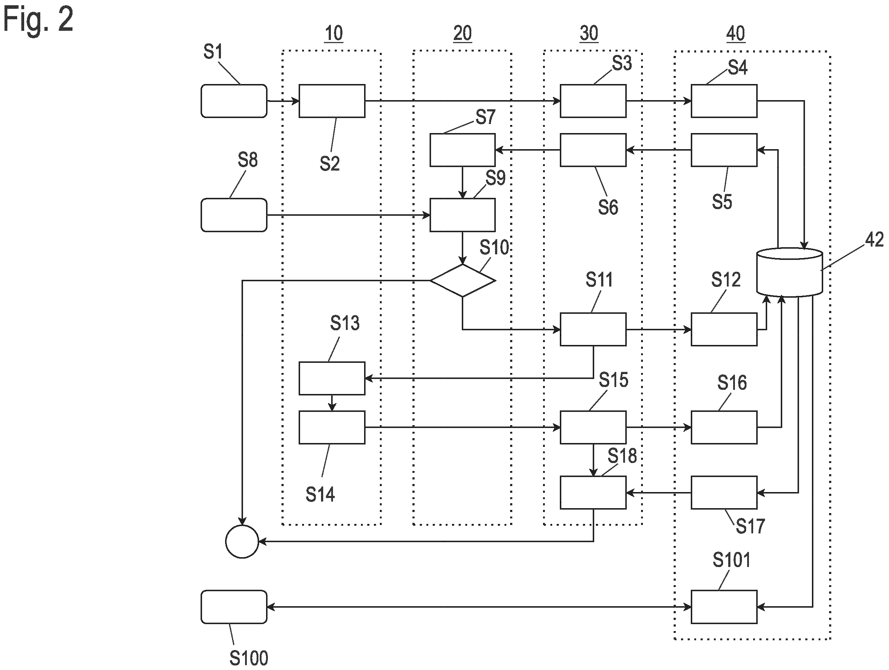

Details der Funktionen der Administrationseinheit 30 und des Tarifservers 40 werden nachfolgend im Zusammenhang mit der Fig. 2 noch näher erläutert.

Ein Ausführungsbeispiel eines erfindungsgemäßen Betriebsverfahren für eine Ladeanordnung ist in Fig. 2 in Form eines Flussdiagramm gezeigt. Das dargestellte Betriebsverfahren kann beispielsweise mit der Ladeanordnung gemäß Fig. 1 durchgeführt werden und wird nachfolgend beispielhaft mit Bezug auf die Ladeanordnung der Fig. 1 beschrieben.

Das Betriebsverfahren umfasst Verfahrensschritte S1 bis S18 und S100-S101, deren repräsentierende Symbole in Fig. 2 horizontal so angeordnet sind, dass sie den verschiedenen Einheiten zugeordnet werden können, in denen bzw. durch die sie ausgeführt werden, konkret der Ladestation 10, dem Bezahlkartenterminal 20, der Administrationseinheit 30 und dem Tarifserver 40. Aktionen eines Benutzers, der die Ladeanordnung nutzt, sind links von denen der Ladestation 10 wiedergegeben.

In dem ersten Schritt S1 schließt der Nutzer sein Elektrofahrzeug an die Ladestation 10 an. Es kann sich bei der Ladestation 10 um eine einzelne Ladestation 10 handeln oder auch eine von mehreren Ladestationen 10, denen gemeinsam das Bezahlkartenterminal 20 zugeordnet ist.

Die Ladestation 10 blockiert danach Ladestecker oder Ladekabel gegenüber einem Abziehen, überprüft eine Kompatibilität mit dem angeschlossenen Elektrofahrzeug und ermittelt mögliche Ladeparameter, beispielsweise einen maximal zulässigen Ladestrom bzw. eine maximal zulässige Ladeleistung. Die Steuereinheit 11 der Ladestation 10 sendet daraufhin eine Nachricht über das erfolgte Anschließen des Elektrofahrzeugs an die Administrationseinheit 30.

Die Nachricht umfasst einen Zeitwert, der Datum und Uhrzeit wiedergibt, die an der Ladestation 10 angezeigt werden. Angezeigt werden können Datum und Uhrzeit beispielsweise auf einem Display des Energiemengenzählers, das in der Regel an der Ladestation 10 einsehbar ist. Das an der Ladestation angezeigte Datum und die Uhrzeit können als Referenzwert dienen, auf dessen Basis dem Nutzer für den Ladevorgang eine Preisgarantie gewährt wird. Dieses kann dem Nutzer durch einen entsprechenden Hinweis an der Ladestation 10 mitgeteilt werden. Die Nachricht kann zudem weitere Informationen über den geplanten Ladevorgang umfassen. Sie ist bevorzugt gemäß den Vorgaben des OCPP (Open Charge Point Protokoll) - Standards erstellt.

Zudem kann dem Nutzer an der Ladestation 10 eine Web-Adresse genannt werden, über die er aktuelle und zurückliegende Preise einsehen kann. Dieses ist jederzeit möglich und im Flussdiagramm der Fig. 2 in den Schritten S100 und S101 dargestellt. Der Nutzer sendet in dem Schritt S100 eine Anfrage, z.B. über einen Web-Browser an den Tarifserver 40, die dieser in dem Schritt S101 empfängt. Der Tarifserver 40 ruft daraufhin einen aktuellen Tarif für die Ladestation 10 aus seinem Datenspeicher 42 ab und sendet sie zurück an den Web-Browser, wo sie dem Nutzer angezeigt werden. In der Regel wird der Tarifserver 40 von einer Mehrzahl von Ladestationen genutzt, die auch unterschiedliche Tarife haben können. Um dem Nutzer die Tarife der Ladestation 10 anzeigen zu können, kann eine eindeutige Kennung der Ladestation 10, beispielsweise eine Ladestations-ID, in der bereitgestellten Web-Adresse enthalten sein.

Die gesendete Nachricht wird in einem Schritt S3 von der Administrationseinheit 30 empfangen und verarbeitet.

Insbesondere fragt die Administrationseinheit 30 in dem Schritt S3 aktuelle Preisinformationen für einen Ladevorgang an der Ladestation 10, der an dem Zeitpunkt gemäß dem Zeitwert gilt, von dem Tarifserver 40 ab.

Bei dem in Fig. 2 dargestellten Ausführungsbeispiel initiiert das Anstecken des Elektrofahrzeugs an die Ladestation 10 in dem Schritt S1 und die nachfolgend gesendete Nachricht in dem Schritt S2 die Preisanfrage durch die Administrationseinheit 30 in dem Schritt S3. In alternativen Ausgestaltungen des Verfahrens kann die Preisanfrage auch auf andere Art und Weise initiiert werden. Beispielsweise ist es denkbar, dass der Nutzer an der Ladestation 10 oder auch dem Bezahlkartenterminal 20 ein Bedienelement betätigt, um eine Preisanfrage zu starten. Von der Ladestation 10 oder dem Bezahlkartenterminal 20 wird dann eine vergleichbare Nachricht wie im Schritt S2 an die Administrationseinheit 30 gesendet, um in dem folgenden Schritt S3 die aktuellen Preisinformationen von dem Tarifserver 40 abzurufen. Auch die dann gesendete Nachricht kann einen Zeitwert umfassen.

Der Tarifserver 40 empfängt diese Anfrage des Schritts S3 in dem Schritt S4 und ermittelt einen aktuellen Tarif zu dem geplanten Ladevorgang. Dieser aktuelle Tarif wird nachfolgend auch als erste Preisinformation bezeichnet. Der Eingangszeitpunkt der Anfrage beim Tarifserver 40 in dem Schritt S4 wird als relevanter Zeitpunkt für die erste Preisanfrage angesehen. Weiter wird eine eindeutige Kennung für den anstehenden Vorgang erstellt, die nachfolgend als Transaktions-ID bezeichnet wird.

Der Tarifserver 40 sammelt bevorzugt regelmäßig Preisinformationen, ggf. aus verschiedenen Quellen für ggf. verschiedene Betreiber von Ladeanordnungen, so dass er jederzeit Kenntnis über aktuelle Preise hat. Der Tarifserver 40 speichert zudem auch zurückliegende Preise zusammen mit einem Gültigkeitszeitraum in seinem Datenspeicher 42, so dass für jeden aktuellen oder in der Vergangenheit liegenden Zeitpunkt ein gültiger Preis angegeben werden kann.

Zusätzlich speichert der Tarifserver 40 konkrete Anfragen, wie z.B. die im Schritt S4 erhaltene Tarifanfrage, zumindest bis ein solcher konkreter Vorgang als abgeschlossen ist. Dazu werden die ersten Preisinformationen zusammen mit den erhaltenen Informationen über den geplanten Ladevorgang, der Transaktions-ID und einem ersten Zeitstempel, der den Eingangszeitpunkt der Anfrage angibt, in dem Datenspeicher 42 archiviert. Der erste Zeitstempel basiert dabei auf einer Systemzeit des Tarifservers 40, die möglichst zuverlässig mit einem offiziellen Zeitnormal synchronisiert wird. Wenn in dem Schritt S4 auch ein Zeitwert der Ladestation 10 empfangen wurde, kann vorgesehen sein, eine Abweichung zur Systemzeit des Tarifservers 40 zu bestimmen und mit abzuspeichern. Das Speichern von Daten im Datenspeicher 42 erfolgt bevorzugt dadurch manipulationssicher, dass die Daten signiert und/oder verschlüsselt gespeichert werden. Auch können zusätzlich zu den Daten signierte und/oder verschlüsselte Hash-Werte der Daten gespeichert werden, die eine zusätzliche Überprüfung der Unversehrtheit der Daten ermöglichen.

Weiter werden die ersten Preisinformationen und die Transaktions-ID in einem nächsten Schritt S5 von dem Tarifserver 40 an die Administrationseinheit gesendet und von dort in einem folgenden Schritt S6 an das Bezahlkartenterminal 20 weitergeleitet. Die Übertragung kann beispielsweise gemäß dem MQTT (Message Queuing Telemetry Transport) - Protokoll erfolgen. Es können aber auch andere Netzwerk-geeignete Protokolle genutzt werden. Die Übertragung kann über die Administrationseinheit 30 erfolgen, wie in Fig. 2 dargestellt ist, oder auch direkt von dem Tarifserver 40 an das Bezahlterminal 20. Auch bei unmittelbarem Zusenden der ersten Preisinformationen von dem Tarifserver 40 an das Bezahlkartenterminal 20 werden die Informationen des Tarifservers 40, insbesondere die vergebene Transaktions-ID, in Kopie an die Administrationseinheit 30 gesendet.

Das Bezahlkartenterminal 20 empfängt die ersten Preisinformationen in dem Schritt S7 und stellt relevante Informationen aus dem Datensatz auf der Anzeigeeinheit 23 dar. Die Informationen beinhalten die ermittelten Preise für den Ladevorgang, beispielsweise in Form eines Grundpreises für den Vorgang sowie eines Energiepreises, der die Kosten pro Kilowattstunde (kWh) angibt. Insbesondere wenn das Bezahlkartenterminal 20 mehreren Ladestationen 10 zugeordnet ist, wird zudem eine eindeutige Kennung der Ladestation 10 angezeigt. Weiter bevorzugt wird ein zu reservierender Betrag angezeigt, der vor Beginn des Ladevorgangs vom Kunden und dem Bezahldienstleister zugesichert werden muss, um den Ladevorgang überhaupt zu starten. Bei Kreditkartenbezahlung kann zum Beispiel vorgesehen sein, einen Maximalbetrag zu reservieren, den ein Nutzer dann gegenüber seinem Kreditkartenanbieter für den anstehenden Ladevorgang freigibt.

Weiter wird mit den Informationen auf der Anzeigeeinheit 23 der Nutzer gebeten, seine Bezahloptionen durch Einführen einer Bezahlkarte, beispielsweise einer Kreditkarte, einer Debitkarte oder einer Girokarte, in den Kartenleser 22 oder durch vorhalten der Bezahlkarte oder eines äquivalenten Mediums, beispielsweise eines Smartphones mit NFC (Near Field Communication) - Schnittstelle, auszuwählen.

Das Verfahren wird fortgesetzt, indem der Nutzer in dem Schritt S7 diesem nachkommt und seine Bezahlinformationen durch Einführen oder Vorhalten der Bezahlkarte (oder des äquivalenten Mediums) in oder vor den Kartenleser 22 dem Bezahlkartenterminal 20 mitteilt. Alternativ kann der Benutzer den Vorgang an dieser Stelle abbrechen, was im Flussdiagramm der Fig. 2 nicht explizit dargestellt ist. Bei einem Abbruch wird eine entsprechende Information an die Administrationseinheit 30 gesendet, die wiederum die Ladestation 10 informiert, um den Ladestecker bzw. das Ladekabel wieder freizugeben.

Weiter kann in dem Schritt S7 vorgesehen sein, Kontaktdaten des Nutzers anzufragen. Die Kontaktdaten können z.B. eine Telefonnummer oder eine E-Mail-Adresse sein, die der Nutzer über die Bedieneinheit 24 eingeben kann und die nachfolgend (vgl. Schritt S14) genutzt werden können, um einen Abrechnungsbeleg an den Nutzer zu senden. Alternativ kann nach diesem oder einem der Folgeschritte eine weitere Web-Adresse bereitgestellt werden, über die der Abrechnungsbeleg später abgerufen werden kann. Die Web-Adresse kann z.B. als QR (Quick Response) - Code angezeigt werden, den der Nutzer bequem mit seinem Mobiltelefon abfotografieren kann.

In einem folgenden Schritt S9 werden die bereitgestellten Informationen über die Bezahlkarte durch den Kartenleser 22 eingelesen, insbesondere eine Karten- oder Kontonummer, und im Bezahlkartenterminal 20 weiterverarbeitet. Zusätzlich kann es erforderlich sein, eine Geheimzahl (PIN) an der Bedieneinheit 24 einzugeben. Es wird danach basierend auf den Informationen des Kartenlesers 22, ggf. der Bedieneinheit 24 und dem zu reservierenden Maximalbetrag eine Anfrage an den hinter der Bezahlkarte des Nutzers stehenden Bezahldienstleister gesendet, um die Transaktion freizugeben und den vorgesehenen Betrag zu reservieren.

Eine Antwort des Bezahldienstleisters wird in einem Schritt S10 vom Bezahlkartenterminal 20 ausgewertet. Wenn die Transaktion durch den Bezahldienstleister genehmigt wird, sendet das Bezahlkartenterminal 20 eine entsprechende Nachricht an die Administrationseinheit 30. Wenn die Transaktion abgelehnt wird, endet der Ladevorgang. In dem Fall wird wiederum eine Information an die Administrationseinheit 30 gesendet, die den Vorgang daraufhin entweder archiviert oder verwirft und die der Ladestation 10 mitteilt, den Vorgang auch gegenüber dem Elektrofahrzeug abzubrechen und Ladestecker bzw. Ladekabel zur Entnahme freizugeben.

Die in dem Schritt S10 an die Administrationseinheit 30 geschickte Freigabe wird dort in dem Schritt S11 empfangen.

Es ist denkbar, dass die Administrationseinheit 30 in dem Schritt S3, S6 oder S11 dem Vorgang eine weitere Kennung zuordnet, was z.B. aus Kompatibilitätsgründe zu bereits bestehenden Betriebsverfahren notwendig ist. Eine solche Kennung wird nachfolgend als Vorgangs-ID bezeichnet. Falls eine solche Vorgangs-ID erstellt wurde, wird sie in dem Schritt S11 dem Tarifserver 40 mitgeteilt. Dieser empfängt eine entsprechende Nachricht in dem Schritt S12 und speichert die Vorgangs-ID, wobei sie der Transaktions-ID zugeordnet wird. Eine Abfrage der auf dem Tarifserver 40 gespeicherten Informationen zu dem in dem Schritt S4 angelegten Vorgang kann ab dann alternativ über die Transaktions-ID oder die Vorgangs-ID erfolgen.

Weiter sendet die Administrationseinheit 30 in dem Schritt S11 eine Nachricht an die Ladestation 10, um den Ladevorgang zu starten. Bevorzugt wird auch ein Wert einer maximal abzugebenden Energiemenge, z.B. angegeben in kWh, mit übertragen, die vom Maximalbetrag gedeckt ist. Diese Nachricht kann wiederum gemäß dem OCPP-Standard gebildet sein.

Falls in alternativen Ausgestaltungen des Verfahrens die erste Preisanfrage nicht durch das Anschließen des Elektrofahrzeugs an die Ladestation in dem Schritt S1 initiiert wurde, schließt der Nutzer spätestens jetzt das Elektrofahrzeug an die Ladestation 10 an. Er kann dazu beispielsweise durch eine entsprechende Nachricht auf der Anzeigeeinheit 23 des Bezahlkartenterminals 20 aufgefordert werden.

Die Ladestation 10 startet dann in einem Schritt S13 den Ladevorgang, was beispielsweise ein Erfassen eines Zählerstand des Energiemengenzählers 12 beim Start des Ladevorgangs beinhaltet.

Der Ladevorgang wird durchgeführt, bis er in einem Schritt S14 beendet wird, woraufhin ein weiterer Wert des Energiemengenzählers 12 ermittelt wird. Die abgegebene Energiemenge ergibt sich aus der Differenz der in den Schritten S13 und S14 ermittelten Zählerwerte des Energiemengenzähler 12. Ein Beenden des Ladevorgangs kann auf verschiedene Weise erfolgen, entweder indem er vom Benutzer an der Ladestation 10 abgebrochen wird, indem das Elektrofahrzeug voll aufgeladen ist oder auch indem die maximal abzugebenden Energiemenge, die von dem reservierten Maximalbetrag gedeckt ist, erreicht ist. Es wird angemerkt, dass das Verfahren analog ablaufen kann, wenn nicht Energie von der Ladestation 10 bezogen wird, sondern von dem Elektrofahrzeug abgegeben wird.

Nach dem Ende des Ladevorgangs sendet die Ladestation 10 einen Datensatz mit Informationen über den absolvierten Ladevorgang an die Administrationseinheit 30. Dieser Datensatz enthält z.B. ein Datentupel mit Kennungen der Ladestation 10 sowie Informationen über Startzeitpunkt und Endzeitpunkt des vorgenommen Ladevorgangs und insbesondere die vom Energiemengenzähler 12 ausgelesenen Informationen über die bezogene Energiemenge. Zudem können im Datentupel die Ladestations-ID und eine weitere Kennung enthalten sein, die den eigentlichen Ladevorgang kennzeichnet und die z.B. von der Ladestation 10 erzeugt werden kann. Diese Kennung wird nachfolgend Ladevorgangs-ID genannt.

Das Datentupel wird üblicherweise in der Ladestation 10 eichrechtskonform vom Energiemengenzähler 12 selbst erzeugt und in dessen Signatureinheit 13 digital signiert. Insbesondere die Energieinformationen sind damit manipulationssicher in dem Datentupel enthalten. Zur digitalen Signatur können übliche und bekannte asymmetrische Verschlüsselungsverfahren eingesetzt werden, z.B. RSA (Rivest-Shamir-Adleman). Das Datentupel kann in einer vorteilhaften Ausgestaltung gemäß dem OCPP - Standard als sogenannter OCMF (Open Charge Metering Format) - String geformt sein.

In dem Schritt S15 werden die von der Administrationseinheit 30 empfangenen Informationen aus dem Datensatz bzw. dem Datentupel weiterverarbeitet. Insbesondere wird die im Ladevorgang übertragene Energiemenge aus den Datentupel ausgelesen und ggf. mithilfe eines öffentlichen Schlüssels der Signatureinheit 13 verifiziert.

Weiter wird ein weiterer Zeitwert bestimmt, der dem Start- oder Endzeitpunkt des Ladevorgangs gemäß dem Datentupel entspricht, sowie die Ladevorgangs-ID ausgelesen.

Die Administrationseinheit überträgt die Ladevorgangs-ID in dem Schritt S15 an den Tarifserver 40 und stellt eine zweite Preisanfrage, die den weiteren Zeitwert und ggf. die übertragene Energiemenge umfasst, an den Tarifserver 40 .

Der Tarifserver 40 empfängt diese Anfrage in dem Schritt S16 und ermittelt, je nach Ausgestaltung des Verfahrens, entweder zweite Preisinformationen, die zum aktuellen Zeitpunkt gemäß der Systemzeit des Tarifservers 40 gelten, oder zweite Preisinformationen, die zum Zeitpunkt, den der weiteren Zeitwert angibt, gegolten haben. Es kann vorgesehen sein, dass der Tarifserver 40 die ersten und zweiten Preisinformationen vergleicht und aus beiden die Preisinformation auswählt, die zu dem günstigsten Gesamtpreis für den Ladevorgang führt. Falls sich der Gesamtpreis aus einem Grundpreis und einem Preis pro Energiemenge, z.B. pro Kilowattstunde (kWh), zusammensetzt, wird die übertragene Energiemenge dabei berücksichtigt. Falls beide Preisinformationen inhaltlich identisch sind, wird die erste Preisinformation gewählt.

Es kann zudem vorgesehen sein, dass der Tarifserver 40 die im Schritt S16 empfangenen Informationen auf ihre Plausibilität überprüft. Beispielsweise kann die enthaltene Ladestations-ID mit derjenigen verglichen werden, die bei der ersten Anfrage im Schritt S4 mitgeteilt wurde. Auch können eventuell im Schritt S4 empfangene Zeitwerte und ggf. ihre Abweichung zur Systemzeit des Tarifservers 40 mit entsprechenden Zeitwerten und ggf. Abweichungen aus dem Datentupel verglichen werden, um zu plausibilisieren, dass der hinter durch das Datentupel beschriebene Ladevorgang tatsächlich der ist, zu dem die Transaktion im Schritt S4 angelegt wurde.

Zur Dokumentation werden die zweiten Preisinformationen zusammen mit den erhaltenen Informationen über den vorgenommenen Ladevorgang und bevorzugt auch ein Hinweis darauf, welche Preisinformation ausgewählt wurde, in dem Datenspeicher 42 archiviert. Die empfangene Ladevorgangs-ID wird ebenfalls vom Tarifserver 40 gespeichert und der Transaktions-ID zugeordnet. Eine Abfrage der auf dem Tarifserver 40 gespeicherten Informationen zu dem in dem Schritt S4 angelegten Vorgang kann ab dann alternativ auch über die Ladevorgangs-ID erfolgen.

Die Auswahl der anzuwendenden Preisinformationen basiert somit vollständig auf einer nachvollziehbaren Grundlage: Der erste Zeitstempel gibt den Zeitpunkt der ersten Tarifabfrage wieder und entspricht i.W. dem Datum und der Uhrzeit, die der Nutzer an der Ladestation 10 selbst eingesehen hat. Der zweite Zeitwert wurde von dem Energiemengenzähler 12 bereitgestellt, der in der Regel eichrechtskonform ausgebildet und zertifiziert und entsprechend vertrauenswürdig ist. Er liegt aufgrund der Signatur der Signatureinheit 13 des Energiemengenzähler 12 nachvollziehbar manipulationssicher vor. Der zu einem bestimmten Zeitpunkt geltende Preis ist durch die permanente Speicherung auf dem Datenspeicher 42 vertrauenswürdig. Dieses gilt insbesondere, da die Preisinformationen aus dem Datenspeicher 42 öffentlich einsehbar sind, z.B. über eine Webseite, die von dem Server 41 bereitgestellt wird, und auf deren Adresse z.B. an der Ladestation 10 hingewiesen wurde.

Durch die öffentlich Einsehbarkeit in den Schritten S100 und S101 kann wirksam eine unabhängige Kontrolle erfolgen, was das Vertrauensniveau des Tarifservers 40 erhöht. Dabei kann, je nach Verfahrensstand, eine allgemeine Anfrage unter Nennung der Ladestations-ID und eines Zeitpunkts erfolgen, oder auch eine konkrete Transaktion durch Angabe der Transaktions-ID, der Vorgangs-ID und/oder der Ladevorgangs-ID abgerufen werden.

Ein hohes Vertrauensniveau kann der Tarifserver 40 zudem dadurch erzielen, dass die auf ihm ablaufenden Programme (d.h. sein Software) in sich manipulationssicher gestaltet ist, z.B. durch hinterlegte Kontrollsummen bzw. Hash-werte. Die Software ist bevorzugt diesbezüglich durch Überwachungsinstitute geprüft und zertifiziert.

Die ausgewählten Preisinformationen wird in einem folgenden Schritt S17 vom Tarifserver 40 an die Administrationseinheit 30 gesendet.

Die Administrationseinheit 30 empfängt die ausgewählten Preisinformationen in dem Schritt S18 und ermittelt basierend auf den Daten aus dem Datentupel, also z.B. dem OCMF - String, und den ausgewählten Preisinformationen einen zu zahlenden Gesamtpreis für den Ladevorgang. Es kann vorgesehen sein, dass der ermittelte Gesamtpreis dann von der Administrationseinheit 30 in Form einer weiteren Nachricht an das Bezahlkartenterminal 20 gesendet wird, das den zu zahlenden Gesamtpreis an den Abrechnungsdienstleister weiterleitet, um die in dem Schritt S8 vom Nutzer repräsentierte Bezahlkarte damit final zu belasten und den Bezahlvorgang abzuschließen.

Weiter erstellt die Administrationseinheit 30 einen Abrechnungsbeleg, der dann zum Beispiel an ein Abrechnungssystem des Betreibers der Ladeanordnung versendet werden kann. Basierend auf dem Abrechnungsbeleg kann der Betreiber der Ladeanordnung eine Abrechnung gegenüber dem Bezahldienstleister vornehmen, falls dieses nicht wie zuvor beschrieben unmittelbar durch das Bezahlkartenterminal 20 erfolgt ist.

Der Abrechnungsbeleg kann zudem an den Nutzer selbst gesendet werden, falls dieser im Schritt S8 eine Telefonnummer angegeben hat oder eine E-Mail-Adresse oder andere Kontaktdaten, über die eine bevorzugt elektronische Zusendung erfolgen kann. Alternativ oder zusätzlich kann eine ggf. zuvor präsentierte weitere Datenadresse genutzt werden, um den Abrechnungsbeleg herunterzuladen.

Im zuvor beschriebenen Beispiel sendet die Administrationseinheit 30 Steueranweisung unmittelbar an die Ladestation 10. In einer alternativen Ausgestaltung des Verfahrens kann stattdessen eine Kommunikation von der Administrationseinheit 30 an die Ladestation 10 zur Steuerung dieser Ladestation 10 über eine zentrale Steuereinrichtung der Ladeanordnung erfolgen, insbesondere wenn die Ladeanordnung mehrere Ladestationen 10 umfasst.

In einer vorteilhaften Ausgestaltung sind nachfolgende Verifikationsschritte zur Überprüfung des vom Benutzer empfangenen Abrechnungsbelegs vorgesehen.

Dazu wird ein Transparenzdienst bereitgestellt, beispielsweise in Form einer Webapplikation oder einer Webseite, der die Option bietet, den Abrechnungsbeleg ein bzw. hochzuladen. Der Transparenzdienst überprüft die Integrität des Abrechnungsdatensatzes anhand eines öffentlich verfügbaren Schlüssels der Signatureinheit 13.

Weiter kann von dem Transparenzdienst überprüft werden, ob die in dem Abrechnungsbeleg enthaltenen Informationen in sich korrekt sind. Insbesondere können die in den Schritten S13 und S14 des Diagramms der Fig. 2 erfassten und vom Energiemengenzähler 12 in der Signatureinheit 13 signierten Energiemengeninformationen ausgelesen werden und mit der Energiemenge, anhand der der Gesamtpreis ermittelt wurde, verglichen werden.

### Bezugszeichenliste

- 10: Ladestation
- 11: Steuereinheit
- 12: Energiemengenzähler
- 13: Signatureinheit

- 20: Bezahlkartenterminal
- 21: Steuereinheit
- 22: Kartenleser
- 23: Anzeigeeinheit
- 24: Bedieneinheit

- 30: Administrationseinheit
- 31: Server

- 40: Tarifserver
- 41: Server
- 42: Datenspeicher

- 50: Netzwerk

- S1-S18: Verfahrensschritt

- S100-S101: Verfahrensschritt

## Patentansprüche

1. Betriebsverfahren für eine Ladeanordnung für ein Elektrofahrzeug, wobei die Ladeanordnung mindestens eine Ladestation (10) und eine Administrationseinheit (30) umfasst, aufweisend die folgenden Schritte:
- Bereitstellen von Tarifen für einen Ladevorgang an der mindestens einen Ladestation (10);
- Speichern und archivieren der bereitgestellten Tarife durch einen Tarifserver (40);
- Bereitstellen einer öffentlichen Zugangsmöglichkeit, um die aktuellen und archivierten Tarife von dem Tarifserver (40) abzurufen;
- Senden einer ersten Tarifanfrage von der Administrationseinheit (30) an den Tarifserver (40) zum Abrufen eines aktuellen Tarifs für die mindestens eine Ladestation (10);
- Durchführen des Ladevorgangs durch die mindestens eine Ladestation (10) und erfassen einer bei dem Ladevorgang übertragenen Energiemenge durch einen Energiemengenzähler (12) der mindestens einen Ladestation (10);
- Erstellen eines Abrechnungsbelegs durch die Administrationseinheit (30) basierend auf dem zuvor abgerufenen Tarif.

2. Betriebsverfahren nach Anspruch 1, bei dem mit dem Abrufen des aktuellen Tarifs durch die Administrationseinheit (30) von dem Tarifserver (40) eine eindeutige Transaktions-ID generiert wird, die zusammen mit dem aktuellen Tarif sowie einem ersten Zeitstempel von dem Tarifserver (40) gespeichert wird.

3. Betriebsverfahren nach Anspruch 1 oder 2, bei dem von der mindestens einen Ladestation (10) nach dem Ladevorgang ein Datensatz erstellt wird, der die erfassten Energiemenge und eine Ladevorgangs-ID umfasst, und der an die Administrationseinheit (30) gesendet wird.

4. Betriebsverfahren nach Anspruch 3, bei dem die Ladevorgangs-ID von der Administrationseinheit (30) an den Tarifserver (40) gesendet wird und durch den Tarifserver (40) mit der Transaktions-ID verknüpft wird.

5. Betriebsverfahren nach Anspruch 3 oder 4, bei dem die Administrationseinheit (30) eine zweite Tarifanfrage an den Tarifserver (40) sendet, um einen Tarif für die mindestens eine Ladestation (10) abzurufen.

6. Betriebsverfahren nach Anspruch 5, bei dem die beiden abgerufenen Tarife verglichen werden, und abhängig von einem Ergebnis des Vergleichs der Abrechnungsbeleg auf Basis eines der Tarife erstellt wird.

7. Betriebsverfahren nach Anspruch 6, bei dem der Tarif, der zu einem günstigeren Gesamtpreis des Ladevorgangs führt, dem Abrechnungsbeleg zugrunde gelegt wird.

8. Betriebsverfahren nach einem der Ansprüche 1 bis 7, bei dem vor dem Senden der ersten Tarifanfrage das Elektrofahrzeugs an die mindestens eine Ladestation (10) angeschlossen wird und eine Nachricht über das Anschließen des Elektrofahrzeugs von der mindestens einen Ladestation (10) an die Administrationseinheit (30) gesendet wird.

9. Betriebsverfahren nach Anspruch 8, bei dem die Nachricht über das Anschließen des Elektrofahrzeugs eine Ladestations-ID der mindestens einen Ladestation (10) und/oder eine aktuell von der Ladestation (10) angezeigte Zeit in Form eines Zeit- und Datumwerts umfasst, wobei die Ladestations-ID und/oder der Zeit- und Datumwert mit der ersten Tarifanfrage von der Administrationseinheit (30) an den Tarifserver (40) übermittelt werden.

10. Betriebsverfahren nach Anspruch 2 und 9, bei dem die von der Administrationseinheit (30) übermittelten Informationen durch den Tarifserver (40) mit der Transaktions-ID verknüpft werden.

11. Betriebsverfahren nach einem der Ansprüche 1 bis 10, bei dem vor dem Starten des Ladevorgangs Bezahlinformationen von dem Nutzer durch ein Bezahlkartenterminal (20) abgefragt und eingelesen werden.

12. Betriebsverfahren nach Anspruch 11, bei dem nach einem Einlesen die Bezahlinformationen durch eine Anfrage bei einem Zahlungsdienstleister verifiziert werden und der Ladevorgang nur durchgeführt wird, wenn die Bezahlinformationen bestätigt werden.

13. Betriebsverfahren nach Anspruch 11 oder 12, bei dem der aktuelle Tarif an das Bezahlkartenterminal (20) gesendet wird und dort zumindest teilweise dargestellt wird.

14. Betriebsverfahren nach einem der Ansprüche 1 bis 13, bei dem der Tarifserver (40) separat und unabhängig von der Administrationseinheit (30) ist.

15. Betriebsverfahren nach einem der Ansprüche 1 bis 14, bei dem der Abrechnungsbeleg an eine Abrechnungsstelle übertragen wird.

16. Betriebsverfahren nach einem der Ansprüche 1 bis 15, bei dem dem Nutzer eine weitere Zugangsmöglichkeit bereitgestellt wird, über die der Abrechnungsbeleg abgerufen werden kann.

17. Ladeanordnung für ein Elektrofahrzeug, umfassend mindestens eine Ladestation (10), **dadurch gekennzeichnet, dass** die Ladeanordnung einen Tarifserver (40) umfasst, der einen an der mindestens einen Ladestation (10) geltenden Tarif speichert und archiviert und der dazu eingerichtet ist, aktuelle und archivierte Tarife auf eine Anfrage hin bereitzustellen.

18. Ladeanordnung nach Anspruch 17, bei der an der mindestens einen Ladestation (10) eine Web-Adresse bereitgestellt ist, über die aktuelle und archivierte Tarife von dem Tarifserver (40) abrufbar sind.

19. Ladeanordnung nach Anspruch 17 oder 18, aufweisend eine Administrationseinheit (30) zur Steuerung eines Ladevorgangs an der mindestens einen Ladestation (10), wobei die Administrationseinheit (30) dazu eingerichtet ist, einen Tarif für einen Ladevorgang von dem Tarifserver (40) anzufragen.

20. Ladeanordnung nach Anspruch 19, die zur Durchführung eines Verfahrens nach einem der Ansprüche 1 bis 16 eingerichtet ist.
